# EUROPÄISCHE PATENTSCHRIFT

(11) **EP 1 541 622 B1**
(45) Veröffentlichungstag und Bekanntmachung des Hinweises auf die Patenterteilung: **04.06.2008**
(21) Anmeldenummer: 03028440.0
(22) Anmeldetag: 11.12.2003
(51) Int. Cl.: C08J 9/32, C08G 18/32, C08K 7/22

(54) **Off-Shore Rohr gedämmt mit syntaktischem Polyurethan enthaltend ein Thixotropiermittel**
Off-Shore tubing insulated with syntactic polyurethanes comprising a thixotropic agent
Tuyau Off-Shore isolé avec du polyurethanne syntactique comprenant un agent thixotrope

(43) Veröffentlichungstag der Anmeldung: 15.06.2005
(73) Patentinhaber: BASF SE, 67056 Ludwigshafen (DE)
(72) Erfinder: Huntemann, Peter, 49448 Stemshorn (DE); Schilling, Udo, 49356 Diepholz (DE)

(56) Entgegenhaltungen:
- WO-A-01/62842
- WO-A-02/20261
- WO-A-97/35913
- US-A- 5 128 433

## Beschreibung

Die Erfindung betrifft ein Off-Shore-Rohr, aufgebaut aus (I) einem inneren Rohr, daran haftend angebracht (ii) eine Schicht aus syntaktischen Polyurethanen, erhältlich durch Umsetzung von einer Polyisocyanatkomponente a) mit einer Polyolkomponente, wobei die Polyolkomponente b) die Bestandteile ein Polyetherpolyol auf Basis eines zwei-, drei- oder vier-funktionellen Startermoleküls b1), ein Thixotropiermittel b2) und ein Kettenverlängerungsmittel b3) umfasst, in Gegenwart von Mikrohohlkugeln c). Ferner betrifft die Erfindung die Verwendung der syntaktischen Polyurethane zur Dämmung von Off-Shore-Rohren sowie andere Teile und Geräte im, welche im Off-Shore-Bereich eingesetzt werden.

Der Begriff syntaktische Kunststoffe umfasst im allgemeinen Kunststoffe, die Hohlfüllstoffe enthalten. Syntaktische Kunststoffe finden üblicherweise Verwendung als thermische Isolierbeschichtungen, aufgrund ihrer vorteilhaften Druckfestigkeit und Temperaturbeständigkeit bevorzugt im Off-Shore Bereich. Ebenfalls sind Anwendungen als Brandschutzmaterial und als Schallisolationsmaterial bekannt.

WO 87/1070 beschreibt ein Wärmeisolationsmaterial, bestehend aus elastomeren Kunststoff, wie beispielsweise Kautschuk oder Styrolbutadien, als Matrix und Mikrohohlglaskugeln, wobei die Mikrohohlglaskugeln in einer Menge von 40 - 80 Vol.% eingearbeitet werden.

WO 99/3922, WO 02/72701 und EP-A-896 976 beschreiben syntaktische Polyurethane, die aus Polyurethan und Mikrohohlglaskugeln bestehen und bevorzugt als Isolierbeschichtung für Rohre im Off-Shore Bereich eingesetzt werden. Die Herstellung erfolgt durch Zugabe der Mikrohohlkugeln zu einer der Polyurethansystemkomponenten und anschließender Vermischung der Systemkomponenten.

WO 02/20261 beschreibt PU-Schlagschaumzusammensetzungen, hergestellt aus einem organischen Polyisocyanat und einem Polyolgemisch, von dem mehr als 50 Gew.- % aus hochmolekularen und weniger als 50 Gew.-% aus einem niedermolekularen Polyol bestehen. Weiter wird ein Thixotropiermittel hinzugefügt. Der Zusammensetzung werden Mikrohohlkugeln hinzugesetzt, um eine pastenförmige Konsistenz zu erzielen.

WO 01/62842 beschreibt hochviskose Reaktionssysteme aus Polyisocyanat und Isocyanat reaktiver Komponente in Anwesenheit eines Thixotropiermittels und Mikrohohlkugeln
Um gute Dämmeigenschaften eines Schaumsystems zu erhalten, ist es vorteilhaft, möglichst viele Mikrohohlkugeln in das System einzuarbeiten. Problematisch ist, dass dieser hohe Füllstoffgehalt in der Regel zu Polyurethansystemen führt, die im häufig angewandten Rotationsgießverfahren schlecht verarbeitbar sind. Ferner sind die im Rotationsgießverfahren hergestellten, mit syntaktischen Polyurethan gedämmten Off-Shore-Rohre derart beschaffen, dass sie nur schwer auf Spulen gewickelt werden können, was aber für Transportzwecke unbedingt nötig ist.

Aufgabe der Erfindung war es, ein mit synthaktischem Polyurethan gedämmtes Off-Shore-Rohr bereit zu stellen, wobei das synthaktische Polyurethan einerseits eine hohe Beladung von Mikrohohlfüllstoffen ermöglicht und somit zu einer niedrigen Gesamtdichte führt, und andererseits die zur Off-Shore-Dämmung benötigten Eigenschaften, wie gute Verarbeitbarkeit im Rotationsgießverfahren und gute Wickeleigenschaften nach Aushärtung der Polyurethane ermöglicht.

Die Erfindung konnte gelöst werden, indem ein mit syntaktischem Polyurethan gedämmtes Off-Shore-Rohr zur Verfügung gestellt wird, wobei das syntaktische Polyurethan durch Umsetzung von handelsüblichen Polyisocyanaten mit einer speziellen Polyolrezeptur hergestellt wurde.

Gegenstand der Erfindung ist daher ein mit synthaktischem Polyurethan gedämmtes Off-Shore-Rohr, wobei das synthaktische syntaktisches Polyurethan erhältlich ist durch Umsetzung von
a) einer Polyisocyanatkomponente mit
b) einer Polyolkomponente, wobei die Polyolkomponente b) die Bestandteile
   b1) ein Polyetherpolyol auf Basis eines zwei-, drei- oder vier-funktionellen Startermoleküls,
   b2) ein Thixotropiermittel und
   b3) ein Kettenverlängerungsmittel
   umfasst, in Gegenwart von
c) Mikrohohlkugeln.

Unter dem Begriff Mikrohohlkugel c) sind im Rahmen dieser Erfindung organische und mineralische Hohlkugeln zu verstehen. Als organische Hohlkugeln können beispielsweise Kunststoffhohlkugeln, z.B. aus Polyethylen, Polypropylen, Polyurethan, Polystyrol oder einem Gemisch daraus, eingesetzt werden. Die mineralische Hohlkugeln können beispielsweise Ton, Aluminiumsilikat, Glas oder Gemische daraus enthalten.

Die Hohlkugeln können im Inneren ein Vakuum oder Teilvakuum aufweisen oder mit Luft, Inertgasen, beispielsweise Stickstoff, Helium oder Argon, oder Reaktivgasen, beispielsweise Sauerstoff, gefüllt sein.

Üblicherweise weisen die organischen (polymeren) oder mineralischen Hohlkugeln einen Durchmesser von 1 bis 1000 µm, bevorzugt von 5 bis 200 µm auf. Üblicherweises weisen die organischen oder mineralischen Hohlkugeln eine Schüttdichte von 0,1 bis 0,4 g/cm³ auf. Sie besitzen im allgemeinen eine Wärmeleitfähigkeit von 0,03 bis 0,12 W/mK.

Bevorzugt werden als Mikrohohlkugeln Mikroglashohlkugeln verwendet. In einer besonders bevorzugten Ausführungsform weisen die Mikroglashohlkugeln eine hydrostatische Druckfestigkeit von mindestens 20 bar auf. Beispielsweise können als Mikrohohlglaskugeln 3M - Scotchlite^{®} Glass Bubbles verwendet werden.

Die Mikrohohlkugeln werden im allgemeinen in einer Menge von 1 bis 80 Gew.-%, bevorzugt von 2 bis weniger als 50 Gew.-%, mehr bevorzugt von 5 bis 35 Gew.-% und besonders bevorzugt von 10 bis 30 Gew.-%, bezogen auf das Gesamtgewicht des resultierenden syntaktischen Polyurethans, zugegeben.

Für die Komponenten a) und b) gilt folgendes:

Die verwendeten Polyisocyanate a) umfassen die üblichen aliphatischen, cycloaliphatischen und insbesondere aromatischen Di- und/oder Polyisocyanate. Bevorzugt verwendet werden Toluylendiisocyanat (TDI), Diphenylmethandiisocyanat (MDI) und insbesondere Gemische aus Diphenylmethandiisocyanat und Polyphenylenpolymethylenpolyisocyanaten (Roh-MDI). Die Isocyanate können auch modifiziert sein, beispielsweise durch Einbau von Uretdion-, Carbamat-, Isocyanurat-, Carbodiimid-, Allophanat- und insbesondere Urethangruppen.

Die in der Polyolkomponente b) verwendeten Polyetherpolyole werden nach literaturbekannten Verfahren, beispielsweise durch anionische Polymerisation mit Alkalihydroxiden oder Alkalialkoholaten als Katalysatoren oder mit Hilfe von Doppelmetallcyanidkatalysatoren und unter Zusatz mindestens eines Startermoleküls, reaktive Wasserstoffatome gebunden enthält, aus einem oder mehreren Alkylenoxiden mit 2 bis 4 Kohlenstoffatomen im Alkylenrest hergestellt. Geeignete Alkylenoxide sind beispielsweise Tetrahydrofuran, Ethylenoxid und 1,2-Propylenoxid. Die Alkylenoxide können einzeln, alternierend nacheinander oder als Mischungen verwendet werden.

Bevorzugt werden Mischungen aus 1,2-Propylenoxid und Ethylenoxid, wobei insbesondere das Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen. In einer weiteren besonders bevorzugten Ausführungsform wird als Alkylenoxid nur 1,2-Propylenoxid verwendet.

Als Startermolekül kommen bevorzugt Alkohole, Amine oder Alkanolamine in Betracht. Als difunktionelle Startermoleküle kann beispielsweise Ethandiol, Propandiol-1,2 und - 1,3, Diethylenglykol, Dipropylenglykol, Butandiol-1,4 oder Hexandiol-1,6 oder Gemische davon verwendet werden. Bevorzugt wird Diethylenglykol oder Dipropylenglykol verwendet. Als trifunktionelle Startermoleküle zu Herstellung des Bestandteils b2) werden bevorzugt Glycerin, Trimethylolpropan oder Gemische davon verwendet. Als 4-funktionelles Startermolekül ist Pentaerythrit möglich.

In einer bevorzugten Ausführungsform wird ein di- oder trifunktionelles Startermolekül zur Herstellung der Komponente b1) verwendet, besonders bevorzugt wird ein trifunktioneller Startermolekül eingesetzt. Insbesondere wird Glycerin als Startermolekül verwendet.

Im allgemeinen wird die Alkoxylierung des Bestandteils b1) derart ausgeführt, dass der Bestandteil b1) ein zahlenmittleres Molekulargewicht von 400 g/mol bis 8000 g/mol, bevorzugt von 3500 bis 6000 g/mol, besonders bevorzugt von 4500 bis 5500 g/mol aufweist.

In einer bevorzugten Ausführungsform umfasst der Polyolbestandteil b1) die Bestandteile b1-1) und b1-2), wobei es sich jeweils um ein Polyetherpolyol, bevorzugt auf Basis eines trifunktionellen Startermoleküls, handelt, jedoch mit unterschiedlichen Molekulargewicht.

Der Bestandteil b1-1) umfasst ein Polyetherpolyol, bevorzugt auf Basis eines trifunktionellen Startermoleküls, mit einem zahlenmittleren Molekulargewicht von 400 g/mol bis 3500 g/mol, bevorzugt von 700 bis 2500 g/mol, besonders bevorzugt von 800 bis 2000 g/mol, insbesondere von 900 bis 1500 g/mol. Alternativ kann als Bestandteil b1-1) auch ein Polyetherpolyol im vorstehend beschriebenen Molekulargewichtsbereich auf Basis von Polytetrahydrofuran (PTHF) verwendet werden.

Der Bestandteil b1-2) umfasst ein Polyetherpolyol, bevorzugt auf Basis eines trifunktionellen Startermoleküls, mit einem zahlenmittleren Molekulargewicht von mehr als 3500 g/mol bis 8000 g/mol, bevorzugt von 3700 bis 5900 g/mol, besonders bevorzugt von 4500 g/mol bis 5500 g/mol.

In den Polyolkomponenten wird als Bestandteil b2) ein Thixotropiermittel verwendet. Als b2) können die aus dem Stand der Technik bekannten Thixotropiermittel verwendet werden, sofern sie verträglich mit der Polyurethan-Systemkomponenten sind. Beispielsweise können anorganische Thixotropiermittel wie Organoschichtsilikate oder organische Thixotropiermittel wie Polyolester oder Toluylendiamid (TDA) und Derivate davon verwendet werden. Bevorzugt werden TDA-Derivate, insbesondere Diethyl-TDA als Komponente b2) verwendet.

Die Polyolkomponente b) enthält ferner als Bestandteil b3) ein Kettenverlängerungsmittel. Unter Kettenverlängerungsmittel versteht man im allgemeinen verzweigte oder unverzweigte Alkohole oder Amine, bevorzugt 2-wertige Alkohole, mit einem Molekulargewicht von weniger als 400 g/mol, bevorzugt weniger als 300 g/mol, insbesondere von 60 bis 250 g/mol. Beispiele hierfür sind Ethylenglykol, 1,4-Butandiol, 1,3-Propandiol, Diethylenglykol oder Dipropylenglykol. Bevorzugt verwendet wird Butandiol-1,4. Besonders bevorzugt verwendet wird Butandiol-1,4 im Gemisch mit Dipropylenglykol und/oder Tripropylenglykol, wobei der Anteil von Butandiol 1,4 mehr als 80 Gew.-%, bezogen auf das Gesamtgewicht des Gemisches, beträgt.

In einer bevorzugten Ausführungsform werden die einzelnen Bestandteile der Polyolkomponente b) (d.h. die Bestandteile b1), gegebenenfalls in Form von b1-1) und b1-2), b2), und b3)) so gewählt, dass die Polyolkomponente b) eine Viskosität bei 25 °C von 500 mPas bis 1500 mPas, bevorzugt von 600 bis 1400 mPas, besonders bevorzugt von 600 bis 1300 mPas, gemessen nach DIN 53019, aufweist.

Im allgemeinen werden die einzelnen Bestandteile der Polyolkomponente b) in folgenden Mengen, jeweils bezogen auf das Gesamtgewicht der Komponente b), eingesetzt:
b1) in einer Menge von 40 bis 90 Gew.-%, bevorzugt von 55 bis 85 Gew.-%,
b2) in einer Menge von 1 bis 20 Gew.-%, bevorzugt von 4 bis 12 Gew.-% und
b3) in einer Menge von 3 bis 25 Gew.-%, bevorzugt von 7 bis 20 Gew.-%, besonders bevorzugt von 9 bis 18 Gew.-%.

Sofern Bestandteil b1) in die Bestandteile b1-1) und b1-2) aufgeteilt ist, so werden diese im allgemeinen in folgenden Mengen, jeweils bezogen auf das Gesamtgewicht der Komponente b), eingesetzt:
b1) in einer Menge von 1 bis 40 Gew.-%, bevorzugt von 2 bis 20 Gew.-%, besonders bevorzugt von 5 bis 15 Gew.-%,
b2) in einer Menge von 39 bis 89 Gew.-%, bevorzugt von 50 bis 80 Gew.-%, besonders bevorzugt von 60 bis 75 Gew.-%.

Gegebenenfalls können der Polyolkomponente noch Zusatzstoffe zugesetzt werden. Hier seien beispielsweise genannt Katalysatoren (Verbindungen, welche die Reaktion der Isocyanatkomponente mit der Polyolkomponente beschleunigen), oberflächenaktive Substanzen, Farbstoffe, Pigmente, Hydrolyseschutzstabilisatoren und/oder Oxidationsschutzmittel sowie UV-Schutzmittel.

Ferner ist es möglich, der Polyolkomponente b) die aus dem Stand der Technik bekannten Treibmittel zuzusetzen. Es ist jedoch bevorzugt, dass die Isocyanatkomponente und die Polyolkomponente kein physikalisches Treibmittel enthält. Ferner ist bevorzugt, dass diesen Komponenten kein Wasser zugesetzt wird. Somit enthalten die Komponenten a) und b) besonders bevorzugt kein Treibmittel, abgesehen von Restwasser, welches in technisch hergestellten Polyolen enthalten ist.

In einer bevorzugten Ausführungsform besitzt die Komponente b) einen Restwassergehalt von 1 bis 3 Gew.-%, besonders bevorzugt von 1,5 bis 2,5 Gew.-%.

Es ist auch möglich, dass der Restwassergehalt durch Zusatz von Wasserfängern reduziert wird. Als Wasserfänger sind beispielsweise Zeolithe geeignet. Die Wasserfänger werden beispielsweise in einer Menge von 0,1 bis 10 Gew.-%, bezogen auf das Gesamtgewicht der Polyolkomponente b), eingesetzt.

Ein erfindungsgemäßes synthaktisches Polyurethan wird vorzugweise hergestellt durch Umsetzung von
a) einer Polyisocyanatkomponente mit
b) einer Polyolkomponente, wobei die Polyolkomponente b) die Bestandteile
   b1) ein Polyetherpolyol auf Basis eines difunktionellen Startermoleküls,
   b2) ein Polyetherpolyol auf Basis eines trifunktionellen Startermoleküls und
   b3) ein Kettenverlängerungsmittel
   umfasst, in Gegenwart von
c) Mikrohohlkugeln.

Für die verwendeten Komponenten a) bis c) wird hier auf vorstehende Ausführungen verwiesen. Ebenso gilt dies für die vorstehend beschriebenen Zusatzstoffe.

Zur Herstellung der Polyurethane werden die Polyisocyanate a) Polyolkomponente b) in solchen Mengen zur Umsetzung gebracht, dass das Äquivalenzverhältnis von NCO-Gruppen der Polyisocyanate a) zur Summe der reaktiven Wasserstoffatome der Komponente b) 1 : 0,5 bis 1 : 3,50 (entsprechend einem Isocyanatindex von 50 bis 350), vorzugsweise 1 : 0,85 bis 1 : 1,30 und besonders bevorzugt von 1 : 0,9 bis 1 : 1,15 beträgt.

Die Ausgangskomponenten werden üblicherweise bei einer Temperatur von 0°C bis 100°C, bevorzugt 15 bis 60°C gemischt und zur Reaktion gebracht. Die Vermischung kann mit den üblichen PUR-Verarbeitungsmaschinen erfolgen. In einer bevorzugten Ausführungsform erfolgt die Vermischung durch Niederdruckmaschinen oder Hochdruckmaschinen.

Die Einarbeitung der Mikrohohlkugeln c) in die PUR-Komponenten erfolgt nach aus dem Stand der Technik bekannten Methoden. Es ist möglich, die Mikrohohlkugeln vor der Umsetzung mindestens einer der Komponenten a) oder b) zuzugeben und/oder die Mikrohohlkugeln unmittelbar nach Umsetzung der Komponenten a) und b) dem noch reagierenden Umsetzungsgemisch zuzugeben. Beispiele für geeignete Vermischungsverfahren sind in WO 94/20286, WO 02/102887 und WO 02/072701 beschrieben. Bevorzugt wird nach der Mischtopfmethode gemäß WO 02/102887 verfahren.

Weiterhin ist Gegenstand der Erfindung die Verwendung der erfindungsgemäßen syntaktischen Polyurethane zur Dämmung von Off-Shore-Rohren oder zur Herstellung von Muffen für Off-Shore-Rohre, sowie zur Herstellung oder Beschichtung anderer Teile und Geräte im Bereich Off-Shore. Beispiele für andere Teile und Geräte im Bereich Off-Shore sind Generatoren, Pumpen und Bojen.

Unter Off-Shore Rohr wird im Rahmen dieser Erfindung ein Rohr verstanden, welches zur Förderung von Öl und Gas dient. Das Öl/ Gas strömt im allgemeinen hierin vom Meeresboden auf Plattformen, in Schiffe/ Tanker oder auch direkt an Land.

Unter Muffen sind die Verbindungen zwischen zwei Rohren oder Rohrteilen zu verstehen.

Gegenstand der Erfindung ist somit ein Off-Shore-Rohr, aufgebaut aus
(i) einem innerem Rohr, daran haftend angebracht
(ii) eine Schicht aus erfindungsgemäßen syntaktischen Polyurethanen.

In einer bevorzugten Ausführungsform weist die Schicht aus erfindungsgemäßen syntaktischen Polyurethan eine Dicke von 5 bis 200 mm, bevorzugt 10 bis 170 mm, besonders bevorzugt 15 bis 150 mm auf.

Es ist weiterhin möglich, dass auf der Schicht aus erfindungsgemäßen Polyurethan eine weitere Schicht, z.B. eine Deckschicht aus einem Thermoplasten, angebracht ist. Bevorzugt ist jedoch, dass bei den erfindungsgemäßen Off-Shore-Rohre auf der Schicht (ii) aus syntaktischem Polyurethan keine weitere Schicht mehr angebracht ist.

Schließlich ist Gegenstand der Erfindung ein Verfahren (auch als Rotationsgießverfahren bezeichnet) zur Herstellung von erfindungsgemäßen Off-Shore-Rohren, umfassend die Schritte
1) Bereitstellen eines inneren Rohres, das mit syntaktischen Polyurethan beschichtet werden soll,
2) Rotieren des zu beschichteten Rohres in axialer Richtung
3) Aufbringen eines nicht ausreagierten Reaktionsgemisches zur Herstellung der Schicht aus syntaktischen Polyurethan, enthaltend die Komponenten a), b) und c), auf das rotierende Rohr.

Im allgemeinen erfolgt in Schritt 3) das Aufbringen des Reaktionsgemisches durch Aufgießen auf das sich drehende Rohr. Bei dem Reaktionsgemisch handelt es sich um ein Polyurethangemisch, das durch Vermischen der Komponenten a), b) und c) mittels herkömmlicher Mischvorrichtungen, z.B. Niederdruckmischkopf, erhalten wurde. Der Vorschub des Mischkopfs oder des Rohres wird im allgemeinen so eingestellt, dass bei konstantem Ausstoß die gewünschte Dicke der syntaktischen Polyurethanschicht erreicht wird.

## Patentansprüche

1. Off-Shore-Rohr, aufgebaut aus
(i) einem innerem Rohr, daran haftend angebracht
(ii) eine Schicht aus syntaktischen Polyurethanen, erhältlich durch Umsetzung von
a) einer Polyisocyanatkomponente mit
b) einer Polyolkomponente, wobei die Polyolkomponente b) die Bestandteile
b1) ein Polyetherpolyol auf Basis eines zwei-, drei- oder vier-funktionellen Startermoleküls,
b2) ein Thixotropiermittel und
b3) ein Kettenverlängerungsmittel
umfasst, in Gegenwart von
c) Mikrohohlkugeln.

2. Off-Shore-Rohr nach Anspruch 1, **dadurch gekennzeichnet, dass** der Polyolbestandteil b1) ein Polyetherpolyol auf Basis eines trifunktionellen Startermoleküls mit einem mittleren Molekulargewicht von mehr als 3500 g/mol bis 8000 g/mol umfasst.

3. Off-Shore-Rohr nach Anspruch 1 oder 2, **dadurch gekennzeichnet, dass** es sich bei der Komponente b2) um Diethyl-TDA handelt.

4. Off-Shore-Rohr nach einem der Ansprüche 1 bis 3, **dadurch gekennzeichnet, dass** die einzelnen Bestandteile der Polyolkomponente b) so gewählt werden, dass die Polyolkomponente b) eine Viskosität bei 25 °C von 500 mPas bis 1500 mPas, gemessen nach DIN 53019, aufweist.

5. Off-Shore-Rohr nach einem der Ansprüche 1 bis 4, **dadurch gekennzeichnet, dass** die Komponenten
b1) in einer Menge von 40 bis 90 Gew.-%,
b2) in einer Menge von 1 bis 20 Gew.-% und
b3) in einer Menge von 1 bis 25 Gew.-%,
bezogen auf das Gesamtgewicht der Polyolkomponente b), vorhanden sind.

6. Off-Shore-Rohr nach einem der Ansprüche 1 bis 5, **dadurch gekennzeichnet, dass** die Schicht (ii) aus syntaktischen Polyurethan eine Dicke von 5 bis 200 mm aufweist.

7. Verwendung von syntaktischen Polyurethanen, erhältlich durch Umsetzung von
a) einer Polyisocyanatkomponente mit
b) einer Polyolkomponente, wobei die Polyolkomponente b) die Bestandteile
b1) ein Polyetherpolyol auf Basis eines zwei-, drei- oder vier-funktionellen Startermoleküls,
b2) ein Thixotropiermittel und
b3) ein Kettenverlängerungsmittel
umfasst, in Gegenwart von
c) Mikrohohlkugeln,
zur Dämmung von Off-Shore-Rohren oder zur Herstellung von Muffen für Off-Shore-Rohre.

8. Verfahren zur Herstellung von Off-Shore-Rohren nach einem der Ansprüche 1 bis 6, umfassend die Schritte
1) Bereitstellen eines inneren Rohres, das mit syntaktischen Polyurethan beschichtet werden soll,
2) Rotieren des zu beschichteten Rohres
3) Aufbringen eines nicht ausreagierten Reaktionsgemisches zur Herstellung der Schicht aus syntaktischen Polyurethan, enthaltend die Komponenten a), b) und c), auf das rotierende Rohr.

## Claims

1. An offshore pipe composed of
(i) an inner pipe and, bonded thereto,
(ii) a layer of syntactic polyurethanes obtainable by reacting
a) a polyisocyanate component with
b) a polyol component, the polyol component b) comprising the constituents
b1) a polyether polyol based on a di-, tri- or tetrafunctional initiator molecule,
b2) a thixotropic agent and
b3) a chain extender,
in the presence of
c) hollow microspheres.

2. The offshore pipe according to claim 1, wherein the polyol constituent b1) comprises a polyether polyol based on a trifunctional initiator molecule having an average molecular weight of more than 3500 g/mol to 8000 g/mol.

3. The offshore pipe according to claim 1 or 2, wherein the component b2) is diethyl-TDA.

4. The offshore pipe according to any of claims 1 to 3, wherein the individual constituents of the polyol component b) are chosen so that the polyol component b) has a viscosity at 25°C of from 500 mPas to 1500 mPas, measured according to DIN 53019.

5. The offshore pipe according to any of claims 1 to 4, wherein the component
b1) is present in an amount of from 40 to 90% by weight,
b2) is present in an amount of from 1 to 20% by weight and
b3) is present in an amount of from 1 to 25% by weight,
based on the total weight of polyol component b).

6. The offshore pipe according to any of claims 1 to 5, wherein the layer (ii) of syntactic polyurethane has a thickness of from 5 to 200 mm.

7. The use of syntactic polyurethanes obtainable by reacting
a) a polyisocyanate component with
b) a polyol component, the polyol component b) comprising the constituents
b1) a polyether polyol based on a di-, tri- or tetrafunctional initiator molecule,
b2) a thixotropic agent and
b3) a chain extender,
in the presence of
c) hollow microspheres,
for insulating offshore pipes or for the production of sockets for offshore pipes.

8. A process for the production of offshore pipes according to any of claims 1 to 6, comprising the steps
1) provision of an inner pipe which has to be coated with syntactic polyurethane,
2) rotation of the pipe to be coated,
3) application of an incompletely reacted reaction mixture for the production of the layer of syntactic polyurethane, comprising the components a), b) and c), to the rotating pipe.

## Revendications

1. Tuyau offshore constitué de :
(i) un tube intérieur, sur lequel est apposée de manière adhésive
(ii) une couche de polyuréthanne syntactique, que l'on peut obtenir par réaction de :
a) un composant polyisocyanate avec
b) un composant polyol, le composant polyol b) comprenant les constituants suivants :
b1) un polyéther polyol à base d'une molécule amorce di-, tri- ou tétrafonctionnelle,
b2) un agent thixotrope et
b3) un agent d'allongement de chaîne,
en présence de :
c) microbilles creuses.

2. Tuyau offshore suivant la revendication 1, **caractérisé en ce que** le constituant polyol b1) comprend un polyéther polyol à base d'une molécule amorce trifonctionnelle d'un poids moléculaire moyen de plus de 3500 g/mole à 8000 g/mole.

3. Tuyau offshore suivant la revendication 1 ou 2, **caractérisé en ce que** le composant b2) est de la diéthyl-TDA.

4. Tuyau offshore suivant l'une quelconque des revendications 1 à 3, **caractérisé en ce que** les constituants individuels du composant polyol b) sont choisis de manière à ce que le composant polyol présente une viscosité à 25°C de 500 mPas allant jusqu'à 1500 mPas, mesurée selon DIN 53019.

5. Tuyau offshore suivant l'une quelconque des revendications 1 à 4, **caractérisé en ce que** les composants sont présents en des quantités de :
b1) 40 à 90 % en poids,
b2) 1 à 20 % en poids et
b3) 1 à 25 % en poids,
par rapport au poids total du composant polyol b).

6. Tuyau offshore suivant l'une quelconque des revendications 1 à 5, **caractérisé en ce que** la couche (ii) de polyuréthanne syntactique présente une épaisseur de 5 à 200 mm.

7. Utilisation de polyuréthannes syntactiques que l'on peut obtenir par réaction de :
a) un composant polyisocyanate avec
b) un composant polyol, le composant polyol b) comprenant les constituants suivants :
b1) un polyéther polyol à base d'une molécule amorce di-, tri- ou tétrafonctionnelle,
b2) un agent thixotrope et
b3) un agent d'allongement de chaîne,
en présence de :
c) microbilles creuses,
pour l'isolation de tuyaux offshore ou la production de manchons pour tuyaux offshore.

8. Procédé de production de tuyaux offshore suivant l'une quelconque des revendications 1 à 6, comprenant les étapes consistant à :
1) procurer un tube intérieur qui doit être revêtu de polyuréthanne syntactique,
2) faire tourner le tube à revêtir,
3) appliquer un mélange réactionnel n'ayant pas totalement réagi pour produire la couche du polyuréthanne syntactique, comprenant les composants a), b) et c), sur le tube en rotation.
